# EUROPÄISCHE PATENTSCHRIFT

(11) **EP 3 290 765 B1**
(45) Veröffentlichungstag und Bekanntmachung des Hinweises auf die Patenterteilung: **15.01.2020**
(21) Anmeldenummer: 16020317.0
(22) Anmeldetag: 30.08.2016
(51) Int. Cl.: F16L 5/08, H02G 3/22

(54) **PRESSDICHTUNG MIT PRESSKÖRPER**
COMPRESSION SEAL WITH PRESSING BODY
JOINT DE COMPRESSION AVEC CORPS DE COMPRESSION

(43) Veröffentlichungstag der Anmeldung: 07.03.2018
(73) Patentinhaber: Hauff-Technik GmbH & Co. KG, 89568 Hermaringen (DE)
(72) Erfinder: Kurz, Ralf, 89537 Giengen (DE)
(74) Vertreter: König Szynka Tilmann von Renesse Patentanwälte Partnerschaft mbB

(56) Entgegenhaltungen:
- EP-A1- 2 829 781
- WO-A1-2005/119111
- WO-A1-2007/097706
- WO-A1-2009/139713

## Beschreibung

Die vorliegende Erfindung betrifft eine Pressdichtung zum Dichten gegen eine Leitung, welche Pressdichtung einen Elastomerkörper, einen Presskörper und einen Spannbolzen aufweist.

Eine vorliegend in Rede stehende Pressdichtung kann bspw. derart aufgebaut sein, dass der Spannbolzen den Elastomerkörper parallel zur Leitung durchsetzt und auf zwei einander entgegengesetzten Stirnseiten des Elastomerkörpers jeweils einen Presskörper hält. Durch Anziehen des Spannbolzens werden die Presskörper dann in Achsrichtung des Spannbolzens aufeinander zubewegt und wird der Elastomerkörper in derselben Richtung komprimiert, um sich in den Richtungen senkrecht dazu dichtend an die Leitung und bspw. die Laibung einer Wandöffnung, etwa einer Kernbohrung, anzulegen. Dies soll einen möglichen Typ Pressdichtung illustrieren, den Gegenstand aber nicht in seiner Allgemeinheit beschränken.

Aus der EP 2 829 781 A1 ist eine Pressdichtung bekannt, deren Presskörper ein Anzeigeelement aufweist, an dem eine beim Anziehen des Spannbolzens auf den Elastomerkörper übertragene Kraft ablesbar ist. Dieses Anzeigeelement kann dann im Einzelnen unterschiedlich ausgestaltet und mit dem Elastomerkörper wirkverbunden sein, der Anzeigebereich ist jedoch stets oberseitig am Presskörper angeordnet, also in Bezug auf die Achsrichtung des Spannbolzens freiliegend. Ein Ablesen ist somit in Aufsicht, entlang der Achsrichtung auf den Presskörper blickend möglich.

Die WO 2007/097706 A1 betrifft ein Rahmensystem, in das elastische Module zum Hindurchführen von Leitungen eingesetzt und mit einer Verspanneinheit verspannt werden. Die Verspanneinheit wird durch Anziehen von Spannbolzen betätigt, wobei die WO 2007/097706 A1 einen Anzeige-Clip beschreibt. Dieser passt auf den nach dem Anziehen hervorstehenden Spannbolzen und zeigt damit das richtige Maß an Verspannung an.

Die WO 2005/119111 A1 zeigt eine Abdichtung für Kabel bzw. Leitungen, die in eine Vakuumkammer verlegt werden. Dabei wird eine Dichtung zwischen zwei Presskörpern axial gestaucht, infolgedessen legt sie sich dichtend an die Leitung an.

Die WO 2009/139713 A1 betrifft eine Durchführung für dünne Wände bzw. Gerätegehäuse, die aus einer Pressdichtung und einer Spannhülse aufgebaut ist.

Der vorliegenden Erfindung liegt die Aufgabe zugrunde, eine besonders vorteilhafte Pressdichtung mit einem ein Anzeigeelement aufweisenden Presskörper anzugeben.

Erfindungsgemäß wird diese Aufgabe mit einer Pressdichtung gemäß Anspruch 1 gelöst.

Bevorzugte Ausgestaltungen finden sich in den abhängigen Ansprüchen und der gesamten Offenbarung, wobei in der Darstellung nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Mit dem in bevorzugter Ausgestaltung seitlich am Presskörper angeordneten Anzeigebereich lassen sich die Gebrauchseigenschaften verbessern bzw. Einsatzmöglichkeiten erweitern. Mit einem Blick schräg von der Seite kann nämlich auch bei einer Einbausituation mit schlechter Zugänglichkeit der Pressdichtung, etwa wenn die fragliche Leitung in Bodennähe oder anderweitig beengt durch die Wand geführt wird, eine Montagekontrolle vorgenommen werden. Im Beispiel von eben muss sich der Monteur dann nicht gesondert hinknien, um tatsächlich in Aufsicht auf den Presskörper zu blicken, sondern sieht er den Anzeigebereich ganz natürlich schräg von oben (im Bezugssystem des Monteurs, seitlich im Bezugsystem des Presskörpers), so wie es seiner natürlichen Blickrichtung bei der Montage entspricht.

Die "Längsachse" des Spannbolzens ist jene Achse, um die der Spannbolzen beim Spannen gedreht wird. Das Gewinde des Spannbolzens erstreckt sich schraubenlinienförmig um seine Längsachse umlaufend. Die Pressdichtung ist bevorzugt derart aufgebaut, dass der Spannbolzen an dem Presskörper mit Anzeigeelement mit seinem Schraubenkopf anliegt, zwischen dem Schraubenkopf und dem Presskörper kann bspw. eine Unterlegscheibe angeordnet sein, die ebenfalls als zum Spannbolzen gehörig betrachtet wird. Als Schraubenkopfantrieb kann bspw. ein Innen-Mehrkant oder vorzugsweise Außen-Mehrkant, besonders bevorzugt ein Außen-Sechskant, vorgesehen sein. Mit dem in Bezug auf eine zur Längsachse parallele Richtung (als "Achsrichtung" bezeichnet) entgegengesetzt angeordneten Presskörper wirkt der Spannbolzen dann über ein Gewinde zusammen. Der Spannbolzen weist also ein Außengewinde auf, das bspw. in eine in den entgegengesetzten Presskörper eingesetzte oder im Falle eines Metall-Presskörpers auch angeschweißte Mutter eingreift; bevorzugt ist der entgegengesetzte Presskörper ein Spritzgussteil, besonders bevorzugt ist eine Mutter aus Metall als Einlegeteil unverlierbar mit dem Kunststoff umspritzt.

Generell beziehen sich im Rahmen dieser Offenbarung die Begriffe "oben" und "unten" ohne ausdrücklich gegenteilige Angabe auf die zur Spannbolzen-Längsachse parallele Achsrichtung, wobei der Spannbolzen per definitionem die Kraft "von oben" auf den Presskörper überträgt, also entsprechend beim Spannen "nach unten" eingedreht wird. Sofern auf eine Anordnung "seitlich" Bezug genommen wird, bezieht sich dies ohne ausdrücklich gegenteilige Angabe auf eine der zu der Achsrichtung senkrechten Richtungen, die auch als "Seitenrichtungen" bezeichnet werden. Vom Presskörper weg ist dabei nach "außen", zum Presskörper hin hingegen nach "innen".

Der Anzeigebereich ist seitlich am Presskörper, also bspw. an einer seitlichen Außenfläche des Presskörpers angeordnet, die sich entlang der Achsrichtung erstreckt, also in einer die Längsachse beinhaltenden Schnittebene betrachtet bspw. um nicht mehr als 45°, 35° bzw. 25° dazu verkippt (in der Reihenfolge der Nennung zunehmend bevorzugt); im Rahmen technisch üblicher Genauigkeiten ist auch eine parallele Erstreckung möglich, es kann andererseits aber auch eine Verkippung von z. B. mindestens 5° bzw. 10° von Interesse sein. Das Anzeigeelement, das in dem seitlichen Anzeigebereich sichtbar wird, wird bevorzugt in der Seitenrichtung, in Bezug auf welche der Anzeigebereich freiliegt, in den Anzeigebereich hineinbewegt und wird mit diesem Hineinbewegen sichtbar.

Unabhängig davon im Einzelnen liegt der Anzeigebereich in Bezug auf eine Seitenrichtung nach außen, vom Presskörper weg frei; er wird dann entsprechend in Bezug auf diese Richtung nicht vom Presskörper selbst und idealerweise auch nicht vom Elastomerkörper verdeckt. Infolge des Freiliegens kann der Monteur seitlich (konkret in der genau entgegengesetzten Seitenrichtung) auf den Anzeigebereich blicken. Eine entsprechende Blickachse muss dabei im Allgemeinen nicht zwingend die Längsachse des Spannbolzens schneiden, sondern kann auch parallel versetzt sein (das hauptanspruchsgemäße Kriterium bezieht sich ausdrücklich auf eine zur Längsachse senkrechte Richtung, ist also im Allgemeinen nicht auf eine dazu senkrechte Gerade beschränkt); bevorzugt liegt der Anzeigebereich gleichwohl in Bezug auf eine zur Spannbolzen-Längsachse senkrechte Blickachse frei.

Eine "Durchgangsöffnung", zu deren Begrenzung hin die Leitung mit dem Elastomerkörper gedichtet werden kann, kann bspw. eine Durchgangsöffnung in einem Wand- oder Bodenelement oder auch generell einem Rohrelement, etwa einem Schutzrohr, in dem die eigentliche Leitung geführt wird, bzw. in einem der Befestigung der Leitung dienenden Befestigungselement sein. Die Durchgangsöffnung kann bspw. von dem Material des Wand-, Boden-, Rohr- oder Befestigungselements selbst "begrenzt" sein; es kann jedoch bspw. auch ein Rahmen oder eine Hülse in der Durchgangsöffnung vorgesehen sein und der Elastomerkörper daran anliegen.

Bei der "Leitung" kann es sich insbesondere um eine Stromleitung, Medienleitung, etwa eine Gas-, Wasser-, Wärme- oder Ölleitung, oder eine Telekommunikations- bzw. Datenleitung, insbesondere Glasfaser-basiert, handeln bzw. auch um ein Leerrohr zur Aufnahme einer solchen Leitung. Vorzugsweise ist die Leitung in einem zur Leitungsrichtung senkrechten Schnitt kreisförmig, besonders bevorzugt gilt dies auch für die Durchgangsöffnung und wird der Elastomerkörper weiter bevorzugt in einem Ringraum angeordnet (und dichtet nach innen zur Leitung und nach außen zur Begrenzung der Durchgangsöffnung hin). Unabhängig davon im Einzelnen grenzt der an den Elastomerkörper anpressbare Presskörper bevorzugt direkt an den Elastomerkörper, liegt er also flächig daran an (im Allgemeinen kann das "Anpressen" aber auch mittelbar erfolgen). In dem Verspannungszustand des Elastomerkörpers, dessen Erreichen das Anzeigeelement visualisiert, liegt der Elastomerkörper einerseits gut dichtend an der Leitung an und ist andererseits die Verspannung aber nicht so groß, dass es zu einer Beschädigung der Leitung bzw. ggf. des Elastomerkörpers kommt.

Im Allgemeinen kann der Presskörper die Anpresskraft auf den Elastomerkörper auch seitlich aufbringen, diesen also in einer Seitenrichtung komprimieren und dabei an die Leitung andrücken. Dazu können der Elastomer- und der Presskörper bspw. gemeinsam in die Durchgangsöffnung gesetzt und der Presskörper durch Anziehen des Spannbolzens seitlich geweitet werden und den Elastomerkörper so an die Leitung andrücken. Bevorzugt ist jedoch ein Verspannen des Elastomerkörpers derart, dass er mittels des Presskörpers in Achsrichtung komprimiert wird und sich infolgedessen in Seitenrichtung an die Leitung anlegt, vgl. auch die vorstehende Beschreibung sowie die ausdrücklich in Bezug genommene Stand-der-Technik-Würdigung. Der Spannbolzen durchsetzt dann nicht nur den Presskörper mit Anzeigeelement, sondern auch den Elastomerkörper und einen in Achsrichtung entgegengesetzten Presskörper (bevorzugt ohne Anzeigeelement).

Bei einer bevorzugten Ausführungsform ist eine Seitenwand des Presskörpers, an welcher der Anzeigebereich vorgesehen ist, jedenfalls in dem Anzeigebereich aus einem zumindest transluzenten (durchscheinenden), bevorzugt transparenten (durchsichtigen), Material vorgesehen, bspw. aus Acrylglas oder Polycarbonat, bevorzugt jeweils gänzlich frei von Farbstoffen. Ist die gewünschte Verspannung erreicht, steht das Anzeigeelement innenseitig an der Seitenwand an und ist dies aufgrund der Transluzenz bzw. Transparenz an der entgegengesetzten Außenfläche optisch erkennbar. Das zumindest transluzente Material soll also in dem Anzeigebereich zumindest teilweise lichtdurchlässig sein, kann also bspw. einen Transmissionsgrad von mindestens 30 %, weiter und besonders bevorzugt mindestens 50 %, 70 % bzw. 80 % haben, wobei unabhängig davon mögliche Obergrenzen z. B. bei höchstens 99 %, 95 % bzw. 90 % liegen können (jeweils gemittelt für den sichtbaren Spektralbereich).

Im Allgemeinen könnte hingegen bspw. auch ein sich seitlich durch die Seitenwand erstreckendes Durchgangsloch den Anzeigebereich bilden. Demgegenüber kann mit dem transluzenten/transparenten Material vorteilhafterweise z. B. ein nach außen weitgehend abgeschlossener Presskörper realisiert werden, was dem Eindringen von Verschmutzung und z. B. auch Insektenfraß vorbeugen helfen kann. Die Seitenwand kann nur in dem Anzeigebereich transluzent/transparent sein, also insoweit ein Sichtfenster bilden; sie kann aber andererseits auch im Gesamten transluzent/transparent sein.

Erfindungsgemäß weist der Presskörper ein erstes und ein zweites Presskörperteil auf und sind diese Presskörperteile in der Achsrichtung zueinander beweglich gelagert. Bei Erreichen des gewünschten Verspannungszustands nehmen sie eine gegenüber dem Ausgangszustand (Spannen des Spannbolzens) veränderte Relativposition ein, was dann über das Anzeigeelement angezeigt wird. Die Relativbewegung muss im Allgemeinen nicht kontinuierlich gelagert sein, die beiden Presskörperteile können die Relativposition im Allgemeinen auch abrupt ("digital") einnehmen, etwa indem eine zu diesem Zweck vorgesehene Materialbrücke bricht oder reißt. Das Anzeigeelement könnte bspw. auch eine Farbkapsel sein, die zwischen den beiden Presskörperteilen angeordnet ist und deren Farbinhalt nach dem Platzen seitlich sichtbar wird, z. B. innenseitig an einer zumindest bereichsweise transluzenten Seitenwand ansteht.

Im Allgemeinen muss die Relativbeweglichkeit der Presskörperteile auch nicht ausschließlich in Bezug auf die Achsrichtung bestehen, sondern soll sie in dieser jedenfalls eine Richtungskomponente haben; bevorzugt ist gleichwohl eine Lagerung derart, dass die Presskörperteile bei zusammengesetztem Presskörper ausschließlich in der Achsrichtung zueinander beweglich sind.

In bevorzugter Ausgestaltung ist die Relativbeweglichkeit der Presskörperteile über ein Verformungselement gelagert, dessen Verformbarkeit jedenfalls einen elastischen Anteil hat, aber bspw. auch zusätzlich einen viskoplastischen Anteil haben kann. Das Verformungselement ist also insoweit ein Elastomerelement (vom Elastomerkörper der Pressdichtung verschieden, also mehrteilig damit). Das Verformungselement ist zwischen den Presskörperteilen angeordnet und wird beim Spannen des Spannbolzens in der Achsrichtung gestaucht und entsprechend seitlich geweitet.

In bevorzugter Ausgestaltung umschließt das Verformungselement den Spannbolzen, erstreckt es sich also um dessen Längsachse vollständig umlaufend (geschlossen). In einer zur Längsachse senkrechten Schnittebene betrachtet hat das Verformungselement also eine Ringform, bevorzugt eine Kreisringform.

Bei einer bevorzugten Ausführungsform ist das Verformungselement zugleich das Anzeigeelement. Im Allgemeinen könnten hingegen Verformungs- und Anzeigeelement auch mehrteilig zueinander sein, könnte das Anzeigeelement also bspw. ein Anzeigestift oder allgemein starrer Anzeigekörper sein, der von dem sich seitlich weitenden Verformungselement nach außen geschoben und so im Anzeigebereich sichtbar wird. Bevorzugt bildet das Verformungselement selbst das Anzeigeelement, wird konkret also bspw. eine seitliche Außenfläche davon bei Erreichen des Verformungszustands in dem Anzeigebereich sichtbar. Bevorzugt hat dann zumindest der in dem Anzeigebereich erscheinende Teil des Verformungselements, besonders bevorzugt das Verformungselement insgesamt, eine gut erkennbare Farbe, also eine Signalfarbe, bspw. Gelb.

Bei einer bevorzugten Ausführungsform ist der Presskörper derart ausgelegt, dass sich das zwischen den beiden Presskörperteilen gestauchte Verformungselement asymmetrisch weitet, also in einer ersten Seitenrichtung mehr als in einer dazu senkrechten zweiten Richtung. Vom unverspannten Ausgangszustand bis in den Verspannungszustand kann sich das Verformungselement in der ersten Seitenrichtung bspw. um mindestens 10 %, 20 %, 30 %, 40 % bzw. 50 % mehr als in der zweiten Seitenrichtung weiten; im Prinzip kann eine Ausdehnung in der zweiten Seitenrichtung auch vollständig blockiert sein, es können aber mögliche Obergrenzen bspw. auch bei höchstens 500 %, 400 % bzw. 300 % liegen. Bildlich gesprochen wird die Verformung in die erste Richtung kanalisiert (z. B. durch Begrenzung in der zweiten Richtung); in der ersten Richtung ist der Anzeigebereich angeordnet, es lässt sich so, durch die dorthin ausgeprägtere Verformung, im Ergebnis die Ablesbarkeit verbessern. Ein weiterer Vorteil kann sich bspw. hinsichtlich eines platzsparenden Aufbaus ergeben, es kann so nämlich der stirnseitig der Pressdichtung verfügbare Raum effizient ausgenutzt werden, vgl. auch das Ausführungsbeispiel. Diese Variante wird im Folgenden auch verkürzt als "asymmetrische Verformung" bezeichnet.

Die asymmetrische Verformung soll ausdrücklich auch unabhängig von der seitlichen Anordnung des Anzeigebereichs offenbart sein, kann also auch im Falle eines Presskörpers mit ausschließlich oberseitigem Anzeigebereich von Interesse sein.

Konkret soll also auch offenbart sein: eine Pressdichtung zum Dichten gegen eine durch eine Durchgangsöffnung geführte Leitung, mit einem Elastomerkörper, einem Presskörper und einem Spannbolzen, wobei der Presskörper durch Anziehen des Spannbolzens solchermaßen an den Elastomerkörper pressbar und damit der Elastomerkörper verspannbar ist, dass sich der Elastomerkörper dichtend an die Leitung anlegt, und wobei ferner der Presskörper ein Anzeigeelement aufweist, das mit Erreichen eines Verspannungszustands des Elastomerkörpers in einem Anzeigebereich des Presskörpers sichtbar wird, wobei der Presskörper ein erstes und ein zweites Presskörperteil aufweist, welche Presskörperteile in einer zu der Längsachse des Spannbolzens parallelen Achsrichtung derart über ein verformbares Verformungselement zueinander beweglich gelagert sind, dass sie in dem Verspannungszustand eine gegenüber dem unverspannten Ausgangszustand veränderte Relativposition einnehmen, was über das Anzeigeelement ablesbar ist, wobei das Verformungselement (das bevorzugt zugleich das Anzeigeelement ist, im Allgemeinen aber auch ein dazu mehrstückiges Anzeigeelement bewegen könnte) bezogen auf die Achsrichtung derart zwischen den Presskörperteilen angeordnet ist, dass es beim Spannen des Spannbolzens in der Achsrichtung gestaucht und senkrecht dazu geweitet wird, und wobei der Presskörper derart ausgelegt ist, dass sich das Verformungselement, wenn es in der Achsrichtung gestaucht wird, in einer ersten zu der Achsrichtung senkrechten Seitenrichtung stärker weitet als in einer zu der Achsrichtung und der ersten Seitenrichtung senkrechten zweiten Seitenrichtung. Für diese Variante kann gleichwohl ausdrücklich eine Kombination mit den übrigen vorliegend für die Pressdichtung offenbarten Merkmalen bevorzugt sein.

In bevorzugter Ausgestaltung der asymmetrischen Verformung (egal ob mit oder ohne seitlichem Anzeigebereich) weist der Presskörper einen Anschlag auf, der das Geweitetwerden des Verformungselements in der zweiten Richtung begrenzt. Bevorzugt bildet eines der Presskörperteile den Anschlag, besonders bevorzugt das untere Presskörperteil. Den Anschlag kann eine Seitenwand des Presskörpers bilden, bevorzugt eine Seitenwand des unteren Presskörperteils, an der an anderer Stelle der Anzeigebereich vorgesehen ist.

Bei einer bevorzugten Ausführungsform ist zumindest eines der Presskörperteile im Gesamten aus einem zumindest transluzenten, bevorzugt transparenten Material vorgesehen, bezüglich dessen möglicher Eigenschaften auf die vorstehende Offenbarung verwiesen wird. Generell sind die beiden Presskörperteile und das Verformungselement bevorzugt jeweils für sich einstückig, also jeweils für sich nicht zerstörungsfrei zerlegbar; zueinander sind sie bevorzugt mehrteilig, werden also jeweils gesondert hergestellt und zusammengesetzt.

Das im Gesamten aus dem zumindest transluzenten Material vorgesehene Presskörperteil muss im Allgemeinen nicht jenes mit dem seitlichen Anzeigebereich sein, was aber bevorzugt ist. Die eben geschilderte Ausführungsform "zumindest ein Presskörperteil im Gesamten aus zumindest transluzentem Material" soll wiederum auch unabhängig vom Vorhandensein eines seitlichen Anzeigebereichs offenbart sein, kann also bspw. auch bei einem Presskörper mit ausschließlich oberseitigem Anzeigebereich von Interesse sein, also auch im Falle ganz allgemein "eines Anzeigeelements, das mit Erreichen eines Verspannungszustands des Elastomerkörpers in einem Anzeigebereich des Elastomerkörpers sichtbar wird", von dem seitlichen Anzeigeelement abgesehen aber bspw. durchaus in Kombination mit einem oder mehreren der Ansprüche 3 bis 8. Es kann nämlich gleichwohl eine Kombination mit anderen vorliegend offenbarten Merkmalen infrage kommen, also bspw. mit der asymmetrischen Verformung.

Bei einer bevorzugten Ausführungsform weist der Presskörper zusätzlich oberseitig einen nach oben freiliegenden Anzeigebereich auf, in dem bei Erreichen des Verspannungszustands ein Anzeigeelement sichtbar wird. Bevorzugt ist dieser oberseitige Anzeigebereich zusätzlich zu dem seitlichen vorgesehen, im Falle der auch unabhängig von den Hauptanspruchsmerkmalen offenbarten Varianten kann bzw. können aber auch ausschließlich oberseitig ein oder mehrere Anzeigebereiche vorgesehen sein.

Bei einer bevorzugten Ausführungsform ist ein jeweiliger Anzeigebereich generell, unabhängig davon, ob seitlich und/oder oberseitig angeordnet, ein jeweiliges Sichtfenster, das einen zumindest transluzenten Bereich in einem demgegenüber weniger transluzenten Bereich aus demselben, durchgehenden Material darstellt. Die beiden Bereiche sind aus demselben Material gebildet, das in dem weniger transluzenten Bereich jedoch weniger transmissiv ausgebildet ist, bevorzugt aufgrund einer im Bereich des Sichtfensters relativ zu dem einfassenden Bereich verringerten Materialdicke (bezogen auf die Blickrichtung des Anzeigebereichs).

Erfindungsgemäß ist der Presskörper mehrteilig aufgebaut, weist er nämlich ein Anpress-Presskörperteil sowie ein Anzeige-Presskörperteil auf (die zueinander "mehrteiligen" Teile sind jeweils für sich hergestellt und zusammengesetzt). Das Anpress-Presskörperteil wird vom Spannbolzen großflächig an den Elastomerkörper angepresst und das Anzeige-Presskörperteil weist das erste und das zweite Presskörperteil sowie das Anzeigeelement auf. Wie auch nachstehend noch im Einzelnen deutlich wird, ist das Anpress-Presskörperteil bevorzugt Ausstattungsteil einer bereits bestehenden Pressdichtung und ist das Anzeige-Presskörperteil nachgerüstet. Es kann also idealerweise ein Typ Anzeige-Presskörperteil mit unterschiedlichen Anpress-Presskörperteilen kombiniert werden können, also verschiedene bereits bestehende Pressdichtungs-Typen nachträglich für die Verformungsanzeige ausgestattet werden.

Unabhängig davon im Einzelnen hat das Anzeige-Presskörperteil einen verdrehsicheren Sitz am Anpress-Presskörperteil, sind die beiden also im zusammengesetzten Zustand nicht um die Spannbolzen-Längsachse zueinander verdrehbar (ein entsprechendes Relativverdrehen ist blockiert). Dies kann bspw. insoweit von Interesse und vorteilhaft sein, als dem nachgerüsteten Anzeige-Presskörperteil dann eine definierte Orientierung vorgegeben werden kann, sodass also bspw. der seitliche Anzeigebereich in die gewünschte Richtung weist. Die Verdrehsicherung kann aber auch unabhängig von der seitlichen Anzeige von Interesse sein, etwa in Verbindung mit der oben genannten "asymmetrischen Verformung" (die auch ausschließlich oberseitig angezeigt werden kann), um bspw. den oberseitigen Anzeigebereich in gewünschter Weise zu positionieren. Schließlich wäre ein beim Anziehen des Spannbolzens mitdrehendes Anzeige-Presskörperteil auch insoweit nicht wünschenswert, als der stirnseitig der Pressdichtung zur Verfügung stehende Raum begrenzt sein und eine optimale Raumausnutzung nur in bestimmten Drehpositionen gegeben sein kann (vgl. auch das Ausführungsbeispiel).

Konkret soll ausdrücklich auch offenbart sein: eine Pressdichtung zum Dichten gegen eine durch eine Durchgangsöffnung geführte Leitung, mit einem Elastomerkörper, einem Presskörper und einem Spannbolzen, wobei der Presskörper durch Anziehen des Spannbolzens solchermaßen an den Elastomerkörper pressbar und damit der Elastomerkörper verspannbar ist, dass sich der Elastomerkörper dichtend an die Leitung anlegt, und wobei ferner der Presskörper ein Anzeigeelement aufweist, das mit Erreichen eines Verspannungszustands des Elastomerkörpers in einem Anzeigebereich des Presskörpers sichtbar wird, wobei der Presskörper ein erstes und ein zweites Presskörperteil aufweist, welche Presskörperteile in einer zu der Längsachse des Spannbolzens parallelen Achsrichtung derart relativ zueinander beweglich gelagert sind, dass sie in dem Verspannungszustand eine gegenüber dem unverspannten Ausgangszustand veränderte Relativposition einnehmen, was über das Anzeigeelement ablesbar ist, wobei der Presskörper mehrteilig aufgebaut ist und ein Anpress-Presskörperteil sowie ein Anzeige-Presskörperteil aufweist, wobei das Anpress-Presskörperteil von dem Spannbolzen beim Spannen großflächig an den Elastomerkörper angepresst wird und das Anzeige-Presskörperteil das erste und das zweite Presskörperteil und das Anzeigeelement aufweist, wobei das Anzeige-Presskörperteil einen in Bezug auf einen Umlauf um die Längsachse des Spannbolzens verdrehsicheren Sitz an dem Anpress-Presskörperteil hat.

In bevorzugter Ausgestaltung, egal ob mit oder ohne seitlichem Anzeigebereich, weist das Anzeige-Presskörperteil einen sich in der Achsrichtung erstreckenden Zapfen auf, aus dessen freiem Ende der Spannbolzen hervortritt. Der Zapfen hat eine Außenkontur, über die er verdrehsicher in einem Durchgangsloch mit entsprechender, bevorzugt komplementärer Innenkontur in dem Anpress-Presskörperteil gehalten ist. Dabei ist eine Mehrkant-Kontur bevorzugt, besonders bevorzugt ist ein Sechskant. Das Anzeige-Presskörperteil mit Zapfen mit Außenkontur ist im Kontext des Nachrüstens insoweit vorteilhaft, als die bestehenden Pressdichtungen meist ohnehin Presskörper mit konturiertem Durchgangsloch aufweisen. Selbst wenn nur an dem Presskörper, mit dem der Spannbolzen über eine Mutter (z. B. Flanschmutter) wechselwirkt, ein (abschnittsweise) konturiertes Durchgangsloch erforderlich ist, wird in der Regel nämlich auch der entgegengesetzt angeordnete Presskörper, mit dem der Schraubenkopf wechselwirkt, baugleich und damit ebenfalls mit konturiertem Durchgangsloch vorgesehen, weil so in der Fertigung weniger unterschiedliche Teile zu handhaben sind.

Die Erfindung betrifft auch einen Satz mit einer Mehrzahl Pressdichtungen, bei welchen der Presskörper jeweils ein Anpress-Presskörperteil und ein Anzeige-Presskörperteil aufweist, wobei sich die Pressdichtungen des Satzes in der Ausgestaltung ihres jeweiligen Anpress-Presskörperteils unterscheiden, hinsichtlich ihrer Anzeige-Presskörperteile jedoch zueinander baugleich sind. In anderen Worten werden also mit demselben Typ Anzeige-Presskörperteil Pressdichtungen unterschiedlicher Bauart nachgerüstet, die sich nämlich jedenfalls in ihren Anpress-Presskörperteilen unterscheiden, bevorzugt auch in ihren Elastomerkörpern.

Die Anzeige-Presskörperteile weisen auch in diesem Fall jeweils einen axial hervortretenden Zapfen analog der vorstehenden Beschreibung auf, aufgrund dessen Außenkontur sie jeweils verdrehsicher im jeweiligen Anpress-Pressteil gehalten sind. Im Allgemeinen muss ein jeweiliges Anzeige-Presskörperteil hierbei nicht zwingend aus zueinander beweglich gelagertem ersten und zweiten Presskörperteil aufgebaut sein, dies ist aber bevorzugt, und es wird insoweit auf die vorstehende Beschreibung verwiesen.

Auch diese Ausführungsform, also dieser Satz mit einer Mehrzahl Pressdichtungen, soll zusätzlich auch unabhängig von der seitlichen Anordnung des Anzeigebereichs offenbart sein, wobei wiederum gleichwohl andere für die Pressdichtung als bevorzugt offenbarte Merkmale verwirklicht sein können. Konkret betrifft die Offenbarung also auch einen Satz mit einer Mehrzahl Pressdichtungen, jeweils zum Dichten gegen eine durch eine jeweilige Durchgangsöffnung geführte Leitung, jeweils mit einem Elastomerkörper, einem Presskörper und einem Spannbolzen, wobei der jeweilige Presskörper durch Anziehen des jeweiligen Spannbolzens solchermaßen an den jeweiligen Elastomerkörper pressbar und damit der jeweilige Elastomerkörper verspannbar ist, dass sich der jeweilige Elastomerkörper dichtend an die jeweilige Leitung anlegt, und wobei ferner der jeweilige Presskörper ein jeweiliges Anzeigeelement aufweist, das mit Erreichen eines Verspannungszustandes des jeweiligen Elastomerkörpers in einem jeweiligen Anzeigebereich des jeweiligen Presskörpers sichtbar wird, wobei die Presskörper der Pressdichtungen jeweils mehrteilig aufgebaut sind und jeweils ein Anpress-Presskörperteil sowie ein Anzeige-Presskörperteil aufweisen, wobei das jeweilige Anpress-Presskörperteil beim Spannen des jeweiligen Spannbolzens großflächig an den jeweiligen Elastomerkörper angepresst wird und das jeweilige Anzeige-Presskörperteil das jeweilige Anzeigeelement und den jeweiligen Anzeigebereich aufweist, wobei ein jeweiliges Anzeige-Presskörperteil ferner jeweils einen sich in einer zur Längsachse des jeweiligen Spannbolzens parallelen Achsrichtung erstreckenden Zapfen aufweist und der jeweilige Spannbolzen den jeweiligen Zapfen durchsetzt und aus dem jeweiligen Zapfen hervortritt, wobei der jeweilige Zapfen eine Außenkontur hat, über die er bezogen auf einen Umlauf um die Längsachse des jeweiligen Spannbolzens formschlüssig in einem jeweiligen Durchgangsloch mit entsprechender Innenkontur in dem jeweiligen Anpress-Presskörperteil gehalten ist, wobei sich die Pressdichtungen des Satzes in der Ausgestaltung ihres jeweiligen Anpress-Presskörperteils unterscheiden, ihre Anzeige-Presskörperteile jedoch zueinander baugleich sind.

Die Erfindung betrifft auch die Verwendung einer vorliegend offenbarten Pressdichtung bzw. eines entsprechenden Satzes zum Ansetzen an und Dichten gegen eine Leitung bzw. jeweilige Leitung.

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.

Im Einzelnen zeigt:
- Figur 1: eine Pressdichtung mit einem Anpress-Presskörperteil und einem daran verdrehsicher gehaltenen Anzeige-Presskörperteil, wobei letzteres einen seitlichen und einen oberen Anzeigebereich aufweist;
- Figur 2: das Anzeige-Presskörperteil der Pressdichtung gemäß Figur 1 in einer geschnittenen Seitenansicht;
- Figur 3: ebenfalls das Anzeige-Presskörperteil der Pressdichtung gemäß Figur 1 in einer geschnittenen Seitenansicht, wobei die Schnittebene gegenüber Figur 2 um 90° gedreht liegt;
- Figur 4: das Anzeige-Presskörperteil der Pressdichtung gemäß Figur 1 in einer Aufsicht, axial darauf blickend;
- Figur 5: das Anzeige-Presskörperteil der Pressdichtung gemäß Figur 1 in einer Seitenansicht.

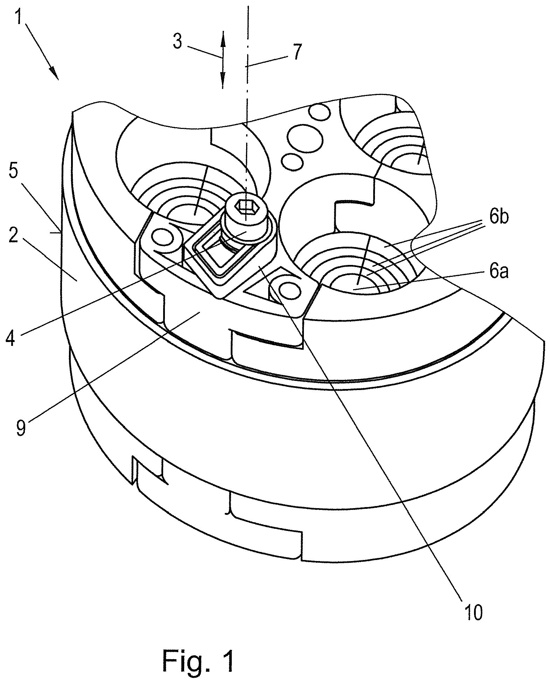

Figur 1 zeigt einen Ausschnitt einer Pressdichtung 1 in einer Schrägansicht. Ein Elastomerkörper 2 ist in Bezug auf eine Achsrichtung 3 zwischen nachstehend noch im Einzelnen diskutierten, jeweils stirnseitig des Elastomerkörpers 2 angeordneten Presskörpern gehalten, die durch Anziehen eines Spannbolzens 4 in Achsrichtung 3 aufeinander zubewegt werden können (die Pressdichtung weist mehrere Spannbolzen auf, in der Ansicht ist nur einer zu erkennen). Infolgedessen wird der Elastomerkörper 2 in Achsrichtung 3 gestaucht und legt sich radial dazu mit seiner Mantelfläche 5 an eine Laibung der Durchgangsöffnung (nicht dargestellt) sowie an eine hindurchgeführte Leitung (ebenfalls nicht dargestellt) an. Durchlassöffnungen im Elastomerkörper 2 für die Leitungen (vorliegend bis zu vier) sind im Ausgangszustand, also vor dem Hindurchführen einer Leitung, jeweils verschlossen, nämlich jeweils mit einem Blindstoffen 6a und einer Mehrzahl Schalen 6b zur Anpassung an unterschiedliche Leitungsdurchmesser.

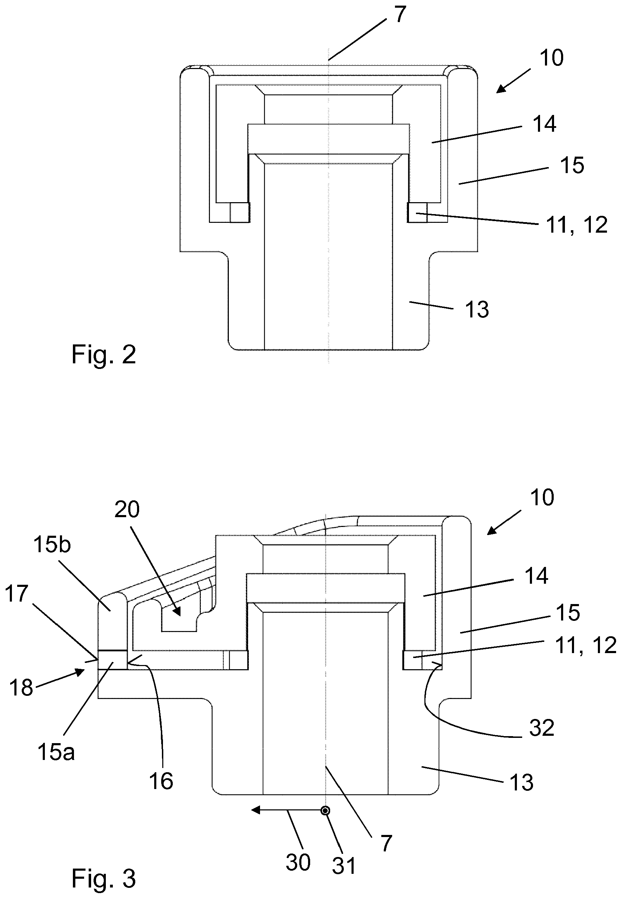

Der Presskörper gliedert sich bezogen auf die Achsrichtung 3, die parallel zur Längsachse 7 des Spannbolzens 4 liegt, in ein Anpress-Presskörperteil 9 und ein Anzeige-Presskörperteil 10. Letzteres wird anhand der Figuren 2 bis 5 weiter im Detail erläutert, das Anpress-Presskörperteil 9 überträgt die beim Anziehen des Spannbolzens 4 erzeugte Spannkraft dann letztlich großflächig auf den Elastomerkörper 2. Um einem Monteur bei der Montage der Pressdichtung 1 das Erreichen eines geeigneten Verspannungszustands des Elastomerkörpers anzuzeigen (gut dichtend, zur Vermeidung einer Materialschädigung aber nicht zu stark verformt), weist das Anzeige-Presskörperteil 10 ein Anzeigeelement 11 auf, vgl. die Figuren 2 und 3.

Bei dem Anzeigeelement 11 handelt es sich um einen Elastomerring, der um die Längsachse 7 des Spannbolzens umlaufend angeordnet ist. Dieser Elastomerring agiert vorliegend zugleich als Verformungselement 12, über das eine axiale Relativbeweglichkeit eines ersten Presskörperteils 13 des Anzeige-Presskörperteils 10 und eines zweiten Presskörperteils 14 des Anzeige-Presskörperteils 10 gelagert ist. Beim Anziehen des Spannbolzens wirkt dieser auf das zweite Presskörperteil 13b, das damit in Richtung des ersten Presskörperteils 13a verschoben wird. Infolgedessen wird beim Verspannen des Elastomerkörpers 2 der Pressdichtung 1 auch das Verformungselement 12 zunehmend verformt, nämlich in Achsrichtung 3 gestaucht (in allgemeinen Worten geht von der zum Verspannen des Elastomerkörpers 2 aufgebrachten Spannkraft ein Teil in die Verformung des Verformungselements 12).

Das Verformungs- 12 bzw. Anzeigeelement 11 ist in seiner Dimensionierung und seinen Materialeigenschaften so gewählt, dass es sich in einem Verspannungszustand des Elastomerkörpers 2, wenn also eine für das Dichten hinreichende und gleichwohl noch materialschonende Spannkraft anliegt, radial so weit geweitet hat, dass es an einer Seitenwand 15 des ersten Elastomerkörperteils 13a ansteht, und zwar an einer Innenfläche 16 davon. Die Seitenwand 15 ist in einem Teilbereich 15a aus einem transparenten Material (Polycarbonat ohne Farbstoff) gebildet, der Bereich 15a stellt also ein Sichtfenster dar. Dieser Bereich 15a ist mit der übrigen Seitenwand 15b einstückig in einem Zwei-Komponenten-Spritzgussverfahren hergestellt.

Das Sichtfenster liegt nicht nur axial in einem begrenzten Bereich vor, sondern erstreckt sich auch in Umlaufrichtung (bezogen auf einen Umlauf um die Längsachse 7) nur über jenen Abschnitt der Seitenwand 15, der eine verringerte Höhe hat, also in Figur 3 nur senkrecht zur Zeichenebene, nicht darüber hinaus. Der Grund hierfür wird nachstehend noch im Einzelnen erläutert. Steht das Anzeigeelement 12 an der Innenfläche 16 an, ist dies in dem transparenten Bereich 15 an der entgegengesetzten Außenfläche 17 optisch erkennbar. Dies kann unterstützt werden, indem das Anzeigeelement 11 mit einer Signalfarbe vorgesehen wird, bspw. gelb eingefärbt.

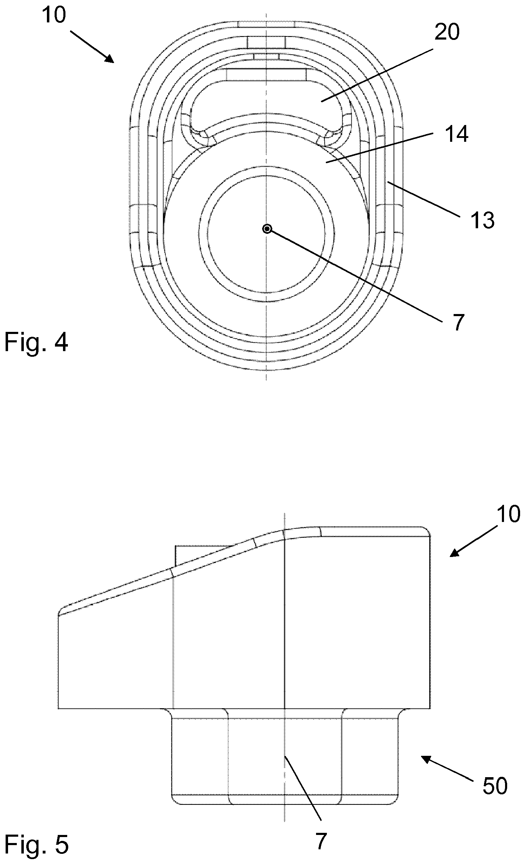

Das Anzeige-Presskörperteil 10 vorliegend weist aber mit dem transparenten Bereich 15a der Seitenwand 15 nicht nur einen seitlichen Anzeigebereich 18 auf, sondern zusätzlich auch einen oberen Anzeigebereich 20, der in Bezug auf die Achsrichtung 3 nach oben frei liegt. In der Aufsicht gemäß Figur 4 ist dieser obere Anzeigebereich 20 derart dargestellt, wie ihn ein bei der Montage axial auf die Pressdichtung 1 blickender Monteur sieht. Das zweite Presskörperteil 14 ist im Gesamten aus einem transparenten Material gebildet, das in dem oberen Anzeigebereich 20 mit einer deutlich verringerten Wandstärke vorgesehen ist. Entsprechend ist das Erscheinen des Anzeigeelements 11 dort gut sichtbar.

Im Einzelnen wird das Anzeigeelement 11 vorliegend in dem oberen Anzeigebereich 20 etwas früher als in dem seitlichen Anzeigebereich 18 sichtbar. Dies kann einerseits bewusst genutzt werden, um zwei unterschiedliche Verspannungszustände des Elastomerkörpers 2 anzuzeigen. Andererseits könnte, soweit die Anzeigebereiche 18, 20 im Wesentlichen denselben Verspannungszustand anzeigen sollen, der obere Anzeigebereich 20 auch radial näher an dem seitlichen Anzeigebereich 18 angeordnet werden, also die axiale Wandstärke des zweiten Presskörperteils 14 erst radial außen, so nah wie möglich an der Seitenwand 15 des ersten Presskörperteils 13 reduziert sein.

Bereits aus der Schrägansicht gemäß Figur 1, insbesondere aber auch aus den Schnitten und der Aufsicht, ist ersichtlich, dass das Anzeige-Presskörperteil 10 asymmetrisch aufgebaut ist. Bezogen auf die Aufsicht gemäß Figur 4 liegen beide Schnitte gemäß den Figuren 2 und 3 senkrecht zu der Zeichenebene, dabei der Schnitt gemäß Figur 2 horizontal und jener gemäß Figur 3 vertikal (sie beinhalten jeweils die Längsachse 7). Infolge des asymmetrischen Aufbaus des Anzeige-Presskörperteils 10 ist das radiale Weiten des Verformungs- 12 bzw. Anzeigeelements 11 in einer ersten Seitenrichtung 30 über eine im Vergleich weite radiale Strecke unbegrenzt, in einer dazu senkrechten zweiten Seitenrichtung 31 (senkrecht auf der Zeichenebene gemäß Figur 3) hingegen relativ früh radial begrenzt.

Bildlich gesprochen wird die Verformung also in die erste Seitenrichtung 30 kanalisiert. Dies ermöglicht eine gute Visualisierung bei zugleich insgesamt anteilig nicht zu starker Verformung des Verformungselements 12. In anderen Worten muss also von der durch Anziehen des Spannbolzens 4 aufgebrachten Spannkraft ein kleinerer Teil in das Verformungselement 12 gehen, um dieselbe radiale Weitung (zu den Anzeigebereichen hin) zu erreichen wie im Falle einer um die Längsachse 7 rotationssymmetrischen Weitung des Verformungselements 12. In der zweiten Seitenrichtung 31 und in einer dazu entgegengesetzten sowie auch in einer zur ersten Seitenrichtung 30 entgegengesetzten Seitenrichtung (über einen Umlaufwinkel von ca. 270°) ist das Geweitetwerden des Verformungselements 12 durch die dort insoweit nach radial innen versetzte Seitenwand 15 begrenzt, die dort einen Anschlag 32 bildet.

Vorliegend zeigen die Figuren 2 bis 5 unterschiedliche Ansichten desselben Anzeige-Presskörperteils 10. Im Prinzip ließe sich aber ein Anzeige-Presskörperteil 10 mit seitlichem Anzeigebereich 18 auch auf Grundlage einer Geometrie gemäß Figur 2 rotationssymmetrisch gestalten. Das Anzeige- 11 bzw. Verformungselement 12 würde dann radial umlaufend im selben Zeitpunkt an der Seitenwand 15 anstehen; es müsste bspw. etwas steifer gefasst werden, um denselben Verformungszustand wie im Falle des bisher diskutierten Anzeige-Presskörperteils 10 anzuzeigen. Im Falle eines solchen, rotationssymmetrischen Aufbaus könnte dann das erste Presskörperteil 13 im Gesamten transparent ausgebildet sein, das zweite Presskörperteil 14 bedarfsweise (bei radialen Abmessungen analog Figur 2 wäre eine Anzeige oberseitig eher nicht möglich).

Die asymmetrischen Ausgestaltung gemäß den Figuren 2 bis 5 ist vorliegend indes auch insoweit vorteilhaft, als sie bei stirnseitig an der Pressdichtung 1 vergleichsweise beengten Raumverhältnissen gleichwohl eine oberseitige Anzeige ermöglicht. Das Anzeige-Presskörperteil 10 ist ferner so ausgelegt, dass es in eine Vielzahl konventioneller Pressdichtungen gesetzt werden kann. Dazu weist es einen axial hervortretenden Zapfen 50 auf (vgl. Figur 5), der Teil des ersten Presskörperteils 13 ist, vgl. die Figuren 3 und 5 in der Zusammenschau. Dieser Zapfen 50 hat eine Außenkontur, vorliegend einen Sechskant. Diese Außenkontur ist zur Innenkontur einer Durchgangsöffnung für den Spannbolzen 4 in dem Anpress-Presskörperteil 9 komplementär. Der Zapfen 50 und damit das gesamte Anzeige-Presskörperteil sind dann also drehsicher am Anpress-Presskörperteil 9 gehalten.

Dabei muss vorteilhafterweise das Anpress-Presskörperteil 9 für dieses Nachrüsten nicht gesondert gestaltet bzw. umgestaltet werden. Gängige Presskörper haben nämlich ohnehin eine Durchgangsöffnung mit abschnittsweiser Innenkontur, in der dann nämlich eine Mutter verdrehsicher sitzt, die mit dem Spannbolzen 4 zusammenwirkt (im Falle der Pressdichtung 1 gemäß Figur 1 an der dem Betrachter abgewandten rückseitigen Stirnseite). Die auf den entgegengesetzten Stirnseiten angeordneten Anpress-Presskörperteile 9 sind spiegelsymmetrisch zueinander, in der Durchgangsöffnung mit Innenkontur kann im Falle einer Pressdichtung 1 ohne Anzeige-Presskörperteil der in Figur 1 sichtbare Spannbolzenkopf mit Innenantrieb frei rotieren.

Vorliegend ist das Anzeige-Presskörperteil 10 in besagte Durchgangsöffnung mit Innenkontur gesetzt und drehsicher gehalten, rotiert der Teil des Anzeige-Presskörperteils 10 mit den Anzeigebereichen 18, 20 beim Spannen des Spannbolzens 4 also nicht gegen die Leitung oder in den Bereich der Durchlassöffnungen hinein. Mit einem entsprechenden Anzeige-Presskörperteil 10 können eine Vielzahl unterschiedlicher Pressdichtungen 1 nachgerüstet werden, weil es eben auch besonders platzsparend ausgelegt ist.

## Patentansprüche

1. Pressdichtung (1) zum Dichten gegen eine durch eine Durchgangsöffnung geführte Leitung, mit
einem Elastomerkörper (2),
einem Presskörper (9, 10) und
einem Spannbolzen,
wobei der Presskörper (9, 10) durch Anziehen des Spannbolzens (4) solchermaßen an den Elastomerkörper (2) pressbar und damit der Elastomerkörper (2) verspannbar ist, dass sich der Elastomerkörper (2) dichtend an die Leitung anlegen kann,
und wobei ferner der Presskörper (9, 10) ein Anzeigeelement (11) aufweist, das mit Erreichen eines Verspannungszustands des Elastomerkörpers (2) in einem Anzeigebereich (18) des Presskörpers (9, 10) sichtbar wird, wobei der Presskörper (9, 10) ein erstes (13) und ein zweites Presskörperteil (14) aufweist, welche Presskörperteile (13, 14) in einer zu der Längsachse (7) des Spannbolzens (4) parallelen Achsrichtung (3) derart relativ zueinander beweglich gelagert sind, dass sie in dem Verspannungszustand des Elastomerkörpers (2) eine gegenüber dem unverspannten Ausgangszustand veränderte Relativposition einnehmen, was über das Anzeigeelement (11) ablesbar ist,
wobei der Presskörper (9, 10) mehrteilig aufgebaut ist und ein Anpress-Presskörperteil (9) sowie ein Anzeige-Presskörperteil (10) aufweist, wobei das Anpress-Presskörperteil (9) von dem Spannbolzen (4) beim Spannen großflächig an den Elastomerkörper (2) angepresst wird und das Anzeige-Presskörperteil (10) das erste (13) und das zweite Presskörperteil (14) und das Anzeigeelement (11) aufweist, wobei das Anzeige-Presskörperteil (10) einen in Bezug auf einen Umlauf um die Längsachse (7) des Spannbolzens (4) verdrehsicheren Sitz an dem Anpress-Presskörperteil (9) hat.

2. Pressdichtung (1) nach Anspruch 1, bei welcher der Anzeigebereich (18) seitlich an dem Presskörper (9, 10), in Bezug auf eine Richtung senkrecht zu der Längsachse (7) des Spannbolzens (4) nach außen frei liegend angeordnet ist.

3. Pressdichtung (1) nach Anspruch 2, bei welcher eine Seitenwand (15) des Presskörpers (9, 10), an welcher der Anzeigebereich (18) vorgesehen ist, jedenfalls in dem Anzeigebereich (18) aus einem zumindest transluzenten Material gebildet ist, wobei das Anzeigeelement (11) in dem Verspannungszustand des Elastomerkörpers (2) an einer Innenfläche (16) der Seitenwand (15) ansteht und dies an der entgegengesetzten Außenfläche (17) der Seitenwand (15) optisch erkennbar ist.

4. Pressdichtung (1) nach einem der vorstehenden Ansprüche mit einem verformbaren Verformungselement (12), über das die Relativbeweglichkeit der Presskörperteile (13, 14) gelagert ist und das dazu bezogen auf die zur Längsachse (7) des Spannbolzens (4) parallele Achsrichtung (3) derart zwischen den Presskörperteilen (13, 14) angeordnet ist, dass es beim Spannen des Spannbolzens (4) in der Achsrichtung (3) gestaucht und senkrecht dazu geweitet wird.

5. Pressdichtung (1) nach Anspruch 4, bei welcher das Verformungselement (12) den Spannbolzen (4) in einer zu der Längsachse (7) des Spannbolzens (4) senkrechten Schnittebene betrachtet umschließt.

6. Pressdichtung (1) nach Anspruch 4 oder 5, bei welcher das Verformungselement (12) zugleich das Anzeigeelement (11) ist.

7. Pressdichtung (1) nach einem der Ansprüche 4 bis 6, bei welcher der Presskörper (9, 10) derart ausgelegt ist, dass sich das Verformungselement (12), wenn der Elastomerkörper (2) gespannt und entsprechend das Verformungselement (12) in der Achsrichtung (3) gestaucht wird, in einer ersten zu der Achsrichtung (3) senkrechten Seitenrichtung (30) stärker weitet als in einer zu der Achsrichtung (3) und der ersten Seitenrichtung (30) senkrechten zweiten Seitenrichtung (31).

8. Pressdichtung (1) nach Anspruch 7, bei welcher der Presskörper (9, 10) einen Anschlag (32) aufweist, den vorzugsweise eines der Presskörperteile (13, 14) bildet, wobei der Anschlag (32), wenn der Elastomerkörper (2) gespannt und entsprechend das Verformungselement (12) in der Achsrichtung (3) gestaucht wird, das Geweitetwerden des Verformungselements (12) in der zweiten Seitenrichtung (31) begrenzt.

9. Pressdichtung (1) nach einem der vorstehenden Ansprüche, bei welcher zumindest eines der Presskörperteile (13, 14) im Gesamten aus einem zumindest transluzenten Material vorgesehen ist.

10. Pressdichtung (1) nach Anspruch 2 oder 3, optional auch in Verbindung mit einem der Ansprüche 4 bis 9, bei welcher der Presskörper (9, 10) zusätzlich oberseitig einen in Bezug auf eine zu der Längsachse (7) des Spannbolzens (4) parallele Achsrichtung (3) nach oben frei liegenden oberen Anzeigebereich (20) aufweist, in dem mit dem Erreichen des Verspannungszustands des Elastomerkörpers (2) ein Anzeigeelement (11) des Presskörpers (9, 10) sichtbar wird.

11. Pressdichtung (1) nach Anspruch 1, optional auch in Verbindung mit einem der Ansprüche 4 bis 9, bei welcher der Anzeigebereich (20) oberseitig, als in Bezug auf eine zu der Längsachse (7) des Spannbolzens (4) parallele Achsrichtung (3) nach oben frei liegender oberer Anzeigebereich (20) vorgesehen ist, in dem mit dem Erreichen des Verspannungszustands des Elastomerkörpers (2) das Anzeigeelement (11) des Presskörpers (9, 10) sichtbar wird.

12. Pressdichtung (1) nach einem der vorstehenden Ansprüche, bei welcher der Anzeigebereich (18) ein Sichtfenster ist bzw. ggf. die Anzeigebereiche (18, 20) jeweils Sichtfenster sind, wobei ein jeweiliges Sichtfenster (18, 20) als transparenter Bereich (15a) in einem zumindest transluzenten Material ausgebildet ist, welcher transparente Bereich von einem ausschließlich transluzenten Bereich eingefasst wird, der aus demselben, durchgehenden, zumindest transluzenten Material gebildet ist.

13. Pressdichtung (1) nach einem der vorstehenden Ansprüche, bei welcher das Anzeige-Presskörperteil (10) einen sich in einer zur Längsachse (7) des Spannbolzens (4) parallelen Achsrichtung (3) erstreckenden Zapfen (50) aufweist und der Spannbolzen (4) das Anzeige-Presskörperteil (10) durchsetzt und aus dem Zapfen (50) hervortritt, wobei der Zapfen (50) eine Außenkontur hat, über die er in Bezug auf den Umlauf formschlüssig in einem Durchgangsloch mit entsprechender Innenkontur in dem Anpress-Presskörperteil (9) gehalten ist.

14. Satz mit einer Mehrzahl Pressdichtungen (1) nach einem der vorstehenden Ansprüche, bei welchen der Presskörper (9, 10) jeweils mehrteilig aufgebaut ist und jeweils ein Anpress-Presskörperteil (9) sowie ein Anzeige-Presskörperteil (10) aufweist, wobei das jeweilige Anpress-Presskörperteil (9) beim Spannen des jeweiligen Spannbolzens (4) großflächig an den jeweiligen Elastomerkörper (2) angepresst wird und das jeweilige Anzeige-Presskörperteil (10) das jeweilige Anzeigeelement (11) und den jeweiligen Anzeigebereich (18) aufweist, wobei ein jeweiliges Anzeige-Presskörperteil (10) ferner jeweils einen sich in einer zur Längsachse (7) des jeweiligen Spannbolzens (4) parallelen Achsrichtung (3) erstreckenden Zapfen (50) aufweist und der jeweilige Spannbolzen (4) den jeweiligen Zapfen (50) durchsetzt und aus dem jeweiligen Zapfen (50) hervortritt, wobei der jeweilige Zapfen (50) eine Außenkontur hat, über die er bezogen auf einen Umlauf um die Längsachse (7) des jeweiligen Spannbolzens (4) formschlüssig in einem jeweiligen Durchgangsloch mit entsprechender Innenkontur in dem jeweiligen Anpress-Presskörperteil (9) gehalten ist, wobei sich die Pressdichtungen (1) des Satzes in der Ausgestaltung ihres jeweiligen Anpress-Presskörperteils (9) unterscheiden, ihre Anzeige-Presskörperteile (10) jedoch zueinander baugleich sind.

15. Verwendung einer Pressdichtung (1) nach einem der Ansprüche 1 bis 13 oder eines Satzes nach Anspruch 14 zum Ansetzen an und Dichten gegen eine Leitung.

## Claims

1. A press seal (1) for sealing against a line led through a through opening, having
an elastomer body (2),
a press body (9,10), and
a tensioning bolt (4),
wherein the press body (9,10) can be pressed against the elastomer body (2) by tensioning the tensioning bolt (4), so that the elastomer body (2) can be tensioned and can contact the line sealingly,
and wherein the press body (9,10) comprises a display element (11) which becomes visible in a display region (18) of the press body (9,10) when the elastomer body (2) reaches a tensioned state,
wherein the press body (9,10) comprises a first (13) and a second press body part (14), the press body parts (13,14) being movable with respect to each other in an axial direction (3) parallel to the longitudinal axis (7) of the tensioning bolt (4), such that the press body parts (13,14) are in a different relative position when the elastomer body (2) is in the tensioned state, compared to a non-tensioned initial state, which can be read out via the display element (11),
wherein the press body (9,10) is multi-part and comprises a pressing press body part (9) and a display press body part (10), wherein an area of the pressing press body part (9) is pressed against the elastomer body (2) by the tensioning bolt (4) during the tensioning, and the display press body part (10) comprises the first (13) and the second press body part (14) and the display element (11), wherein the display press body part (10) has a seat at the pressing press body part (9), secured against a rotation around the longitudinal axis (7) of the tensioning bolt (4).

2. The press seal (1) according to claim 1, wherein the display region (18) is arranged laterally at the press body (9,10), exposed outwards in a direction perpendicular to the longitudinal axis (7) of the tensioning bolt (4).

3. The press seal (1) according to claim 2, wherein a lateral wall (15) of the press body (9,10), at which lateral wall (15) the display region (18) is provided, is formed of a material which is at least translucent, at least in the display region (18), wherein the display element (11) contacts an inner surface (16) of the lateral wall (15), which is visible at an opposite outer surface (17) of the lateral wall (15), when the elastomer body (2) is in the tensioned state.

4. The press seal (1) according to one of the preceding claims, having a deformable deformation element (12), the relative movement of the press body parts (13,14) being supported by the deformation element (12) arranged, in the axial direction (3) parallel to the longitudinal axis (7) of the tensioning bolt (4), between the press body parts (13,14), the deformation element (12) being compressed in the axial direction (3) and being widened perpendicularly thereto when the tensioning bolt (4) is tensioned.

5. The press seal (1) according to claim 4, wherein the deformation element (12) encloses the tensioning bolt (4) in a sectional plane lying perpendicular to the longitudinal axis (7) of the tensioning bolt (4).

6. The press seal (1) according to claim 4 or 5, wherein the deformation element (12) is also the display element (11).

7. The press seal (1) according to one of claims 4 to 6, wherein the press body (9,10) is adapted such that the deformation element (12) widens, when the elastomer body (2) is tensioned and the deformation element (12) is compressed in the axial direction (3), more in a first lateral direction (30) perpendicular to the axial direction (3) than in a second lateral direction (31) perpendicular to the axial direction (3) and to the first lateral direction (30).

8. The press seal (1) according to claim 7, wherein the press body (9,10) comprises a stop (32), which is preferably formed by one of the press body parts (13,14), wherein the stop (32) limits the widening of the deformation element (12) in the second lateral direction (31) when the elastomer body (2) is tensioned and the deformation element (12) is compressed in the axial direction (3).

9. The press seal (1) according to one of the preceding claims, wherein at least one of the press body parts (13,14) is formed as a whole of a material being at least translucent.

10. The press seal (1) according to claim 2 or 3, optionally also in combination with one of claims 4 to 9, wherein the press body (9,10) additionally comprises an upper display region (20) at its upper side, which is exposed upwards in an axial direction (3) lying parallel to the longitudinal axis (7) of the tensioning bolt (4), a display element (11) of the press body (9,10) becoming visible in the upper display region (20) when the tensioned state of the elastomer body (2) is reached.

11. The press seal (1) according to claim 1, optionally also in combination with one of claims 4 to 9, wherein the display region (20) is arranged at an upper side, forming an upper display region (20) exposed upwards in an axial direction (3) lying parallel to the longitudinal axis (7) of the tensioning bolt (4), the display element (11) of the press body (9,10) becoming visible in the upper display region (20) when the tensioned state of the elastomer body (2) is reached.

12. The press seal (1) according to one of the preceding claims, wherein the display region (18) or the display regions (18,20) are inspection windows respectively, wherein a respective inspection window (18,20) is formed as a transparent region (15a) in a material which is at least translucent, the transparent region (15a) surrounded by a region being only translucent, this region being formed of the same continuous material being at least translucent.

13. The press seal (1) according to one of the preceding claims, wherein the display press body part (10) comprises a stud (50) extending in an axial direction (3) lying parallel to the longitudinal axis (7) of the tensioning bolt (4), the tensioning bolt (4) intersecting the display press body part (10) and protruding from the stud (50), wherein the stud (50) has an outer contour which holds the stud (50) circumferentially by a form fit in a through hole in the pressing press body part (9), the through hole having a corresponding inner contour.

14. A set with a plurality of press seals (1) according to one of the preceding claims, wherein the press bodies (9,10) respectively are multi-part and respectively comprise a pressing press body part (9) and a display press body part (10), wherein an area of the respective pressing press body part (9) is pressed against the respective elastomer body (2) by the respective tensioning bolt (4) during the tensioning, and the respective display press body part (10) comprises the respective display element (11) and the respective display region (18), wherein a respective display press body part (10) further comprises a respective stud (50) extending in an axial direction (3) parallel to the longitudinal axis (7) of the respective tensioning bolt (4), the respective tensioning bolt (4) intersecting the respective stud (50) and protruding from the respective stud (50), wherein the respective stud (50) has an outer contour which holds the respective stud (50) circumferentially by a form fit in the respective pressing press body part (9), namely in a respective through hole with a corresponding inner contour, wherein the press seals (1) of the set differ regarding their pressing press body parts (9) but have identically constructed display press body parts (10).

15. A use of a press seal (1) according to one of claims 1 to 13 or of a set according to claim 14 for placing it at a line and sealing against the latter.

## Revendications

1. Joint de compression (1) visant à assurer l'étanchéité par rapport à une conduite traversant une ouverture de passage, comportant un corps élastomère (2),
un corps de compression (9, 10), et
un boulon de serrage ;
ledit corps de compression (9, 10) pouvant être pressé contre le corps élastomère (2) par serrage du boulon de serrage (4), et le corps élastomère (2) pouvant ainsi être serré, de telle manière que le corps élastomère (2) puisse être plaqué de façon étanche contre la conduite,
et ledit corps de compression (9, 10) présentant en outre un élément indicateur (11) qui apparait dans une zone d'indication (18) du corps de compression (9, 10) une fois qu'un état de serrage du corps élastomère (2) a été atteint,
ledit corps de compression (9, 10) présentant une première (13) et une deuxième (14) partie de corps de compression, lesquelles parties de corps de compression (13, 14) sont agencées mobiles l'une par rapport à l'autre dans une direction axiale (3) parallèle à l'axe longitudinal (7) du boulon de serrage (4), de telle manière que, lorsque le corps élastomère (2) est à l'état de serrage, elles adoptent une position relative modifiée par rapport à celle de l'état initial non serré, ce qui peut être visualisé grâce à l'élément indicateur (11),
ledit corps de compression (9, 10) se composant de plusieurs pièces et présentant une pièce de pression (9) ainsi qu'une pièce d'indication (10), ladite pièce de pression (9) étant pressée contre le corps élastomère (2), sur une surface, sous l'effet du serrage du boulon de serrage (4), et la pièce d'indication (10) présentant la première (13) et la deuxième (14) partie de corps de compression ainsi que l'élément indicateur (11), ladite pièce d'indication (10) disposant d'une assise résistant à la rotation sur la pièce de pression (9), eu égard à une rotation autour de l'axe longitudinal (7) du boulon de serrage (4).

2. Joint de compression (1) selon la revendication 1, dans lequel la zone d'indication (18) est située latéralement sur le corps de compression (9, 10) en étant exposée vers l'extérieur eu égard à une direction perpendiculaire à l'axe longitudinal (7) du boulon de serrage (4).

3. Joint de compression (1) selon la revendication 2, dans lequel une paroi latérale (15) du corps de compression (9, 10) sur laquelle est prévue la zone d'indication (18) est constituée, du moins dans la zone d'indication (18), dans un matériau au moins translucide, ledit élément indicateur (11) se trouvant, lorsque le corps élastomère (2) est à l'état de serrage, contre une surface intérieure (16) de la paroi latérale (15), cela étant perceptible par voie optique au niveau de la surface extérieure (17) opposée de la paroi latérale (15).

4. Joint de compression (1) selon l'une des revendications précédentes, comportant un élément de déformation (12) déformable permettant d'assurer la mobilité relative des parties de corps de compression (13, 14) et qui est disposé à cet effet entre les parties de corps de compression (13, 14), eu égard à la direction axiale (3) parallèle à l'axe longitudinal (7) du boulon de serrage (4), de manière à subir un écrasement dans la direction axiale (3) et à s'élargir perpendiculairement à cette direction lors du serrage du boulon de serrage (4).

5. Joint de compression (1) selon la revendication 4, dans lequel l'élément de déformation (12) entoure le boulon de serrage (4), vu dans un plan en coupe perpendiculaire à l'axe longitudinal (7) du boulon de serrage (4).

6. Joint de compression (1) selon la revendication 4 ou 5, dans lequel l'élément de déformation (12) constitue simultanément l'élément indicateur (11).

7. Joint de compression (1) selon l'une des revendications 4 à 6, dans lequel le corps de compression (9, 10) est conçu de manière que, lorsque le corps élastomère (2) subit un serrage et que l'élément de déformation (12) subit un écrasement corrélatif dans la direction axiale (3), l'élément de déformation (12) s'élargit dans une première direction latérale (30) perpendiculaire à la direction axiale (3) plus fortement que dans une deuxième direction latérale (31) perpendiculaire à la direction axiale (3) et à la première direction latérale (30).

8. Joint de compression (1) selon la revendication 7, dans lequel le corps de compression (9, 10) présente une butée (32) constituée de préférence par une des parties de corps de compression (13, 14), ladite butée (32) limitant l'élargissement de l'élément de déformation (12) dans la deuxième direction latérale (31) lorsque le corps élastomère (2) est serré et que l'élément de déformation (12) subit un écrasement corrélatif dans la direction axiale (3).

9. Joint de compression (1) selon l'une des revendications 3 à 8, dans lequel l'une au moins des parties de corps de compression (13, 14) est réalisée dans sa totalité dans un matériau au moins translucide.

10. Joint de compression (1) selon la revendication 2 ou 3, prise également facultativement en conjonction avec l'une des revendications 4 à 9, dans lequel le corps de compression (9, 10) présente en outre sur le haut une zone d'indication (20) supérieure exposée vers le haut, eu égard à une direction axiale (3) parallèle à l'axe longitudinal (7) du boulon de serrage (4), dans laquelle zone apparait un élément indicateur (11) du corps de compression (9, 10) une fois que l'état de serrage du corps élastomère (2) a été atteint.

11. Joint de compression (1) selon la revendication 1, prise également facultativement en conjonction avec l'une des revendications 4 à 9, dans lequel la zone d'indication (20) est prévue sur le haut sous la forme d'une zone d'indication (20) supérieure exposée vers le haut, eu égard à une direction axiale (3) parallèle à l'axe longitudinal (7) du boulon de serrage (4), dans laquelle zone apparait un élément indicateur (11) du corps de compression (9, 10) une fois que l'état de serrage du corps élastomère (2) a été atteint.

12. Joint de compression (1) selon l'une des revendications précédentes, dans lequel la zone d'indication (18) consiste en un regard ou bien les zones d'indication (18, 20) consistent en des regards, chacun desdits regards (18, 20) étant conçu sous la forme d'une zone transparente (15a) composée d'un matériau au moins translucide et enchâssée dans une zone exclusivement translucide composée du même matériau au moins translucide continu.

13. Joint de compression (1) selon l'une des revendications précédentes, dans lequel la pièce d'indication (10) présente un téton (50) s'étendant dans une direction axiale (3) parallèle à l'axe longitudinal (7) du boulon de serrage (4), ledit boulon de serrage (4) traversant la pièce d'indication (10) et sortant par le téton (50), ledit téton (50) présentant un contour extérieur lui permettant d'être retenu par complémentarité de forme, eu égard à une rotation, dans un trou de passage présentant un contour intérieur correspondant dans la pièce de pression (9).

14. Ensemble comportant une pluralité de joints de compression (1) selon l'une des revendications précédentes, dans lesquels chaque corps de compression (9, 10) se compose de plusieurs pièces et présente respectivement une pièce de pression (9) ainsi qu'une pièce d'indication (10), chaque pièce de pression (9) étant pressée contre le corps élastomère (2) respectif, sur une grande surface, sous l'effet du serrage du boulon de serrage (4) respectif, et chaque pièce d'indication (10) présentant ledit élément indicateur (11) respectif et ladite zone d'indication (18) respective, chaque pièce d'indication (10) présentant en outre un téton (50) respectif s'étendant dans une direction axiale (3) parallèle à l'axe longitudinal (7) du boulon de serrage (4) respectif, ledit boulon de serrage (4) respectif traversant le téton (50) respectif et sortant par le téton (50) respectif, chaque téton (50) présentant un contour extérieur lui permettant d'être retenu par complémentarité de forme, eu égard à une rotation autour de l'axe longitudinal (7) du boulon de serrage (4) respectif, dans un trou de passage respectif présentant un contour intérieur correspondant dans la pièce de pression (9) respective, chacun des joints de compression (1) de l'ensemble présentant une pièce de pression (9) de conception différente mais leurs pièces d'indication (10) respectives sont de construction identique.

15. Utilisation d'un joint de compression (1) selon l'une des revendications 1 à 13 ou d'un ensemble selon la revendication 14 destiné à être appliqué sur une conduite pour assurer l'étanchéité par rapport à celle-ci.
